# EUROPEAN PATENT APPLICATION

(11) **EP 2 465 825 A1**
(43) Date of publication of application: **20.06.2012**
(21) Application number: 10194826.3
(22) Date of filing: 14.12.2010
(51) Int. Cl.: C02F 11/12

(54) **An arrangement and a method for removing liquid from a sludge**

(71) Applicant: Biotain AB, 262 73 Ängelholm (SE)
(72) Inventor: Broberg, JAN, SE-254 51, HELSINGBORG (SE)
(74) Representative: Olsson, Jan

(57) **Abstract**

An arrangement for removing liquid from a sludge comprises a filter (3) having at least one filter surface (4) configured to filter a said sludge by retaining dry substance of the sludge thereonto and letting liquid substance of the sludge pass through. Means (8) is configured to spray a liquid onto sludge present on said filter surface (4) so as to spread out the sludge over the filter surface. Means (9) are configured to keep the filter surface (4) substantially horizontally during said spraying so as to utilize the gravitation for obtaining passing of liquid substance through the filter surface and by that for said removal of liquid from the sludge.

## Description

### TECHNICAL FIELD OF THE INVENTION AND BACKGROUND ART

The present invention relates to an arrangement for removing liquid from a sludge comprising a filter having at least one filter surface configured to filter a said sludge by retaining dry substance of the sludge thereonto and letting liquid substance of the sludge pass through, and means configured to feed a said sludge, from which liquid is to be removed, onto said at least one filter surface, and a method according to the preamble of the appended independent method claim.

An arrangement for removing liquid from a sludge of any conceivable type is comprised, and a sludge in the form of cow droppings and a sewage sludge may here be mentioned as typical examples without restricting the invention thereto.

A said arrangement is used when there is a desire to remove liquid from the sludge for different reasons, such as for being able to utilize the dry substance thus obtained, for instance as a biomass for combustion or gasification or as a substrate for production of biogas when the sludge is of any of the types mentioned above as examples.

The dry substance content in said sludge to be treated by such an arrangement is typically 2-10 weight-%, but the present invention is not restricted to any value of said dry substance content. It is also possible to dilute a sludge to be treated before said removal of liquid for improving the efficiency of the removal of liquid should the dry substance content of the sludge be too high.

It is pointed out that "removing liquid" as used in the claims and in the rest of this disclosure is to be interpreted as increasing the dry substance content of the sludge, and "dry substance retained" and "dry substance" may accordingly still contain a considerable concentration of liquid. Thus, the dry substance content aimed at by using an arrangement of this type may typically be about 50 weight-%, which means that about 50 weight-% water or other liquid is then still present in the dry substance.

Filtering carried out in known arrangements of this type involves pressing of the sludge against said filter surface, so that liquid and also small solid particles of the sludge will pass therethrough. Such pressing is for instance obtained by rotating said filter and by that exerting the sludge to centrifugal forces.

Although such a procedure may be efficient with respect to the removal of liquid from a sludge there is still a disadvantage that small solid particles are following the liquid substance through the filter. This may require additional treatment of the liquid substance for a subsequent use thereof and a loss of some of the dry substance which could theoretically have been obtained.

### SUMMARY OF THE INVENTION

The object of the present invention is to provide an arrangement and a method of the type defined in the introduction being improved in at least some aspect with respect to such arrangements and methods already known.

This object is according to the invention obtained by providing such an arrangement, which further comprises means configured to spray a liquid onto a said sludge fed to and present on said at least one filter surface so as to spread out said sludge over said filter surface, and means configured to keep said at least one filter surface substantially horizontally during said spraying so as to utilize the gravitation for obtaining passing of said liquid substance through said filter surface and by that for said removal of liquid from said sludge.

It has surprisingly been found that an efficient filtering and by that removal of liquid from a sludge may thanks to said spreading out by liquid spraying be obtained by utilizing the gravitation without any need of creating pressing forces upon the sludge. Furthermore, this does not only mean a simplification and by that a reduction of costs for components of a said arrangement, but it also results in a remarkably low degree of dry substance in said liquid substance having passed through said filter surface.

According to an embodiment of the invention said spraying means comprises a plurality of nozzles configured to carry out an oscillating movement for moving liquid jets emerging therefrom to and fro over said filter surface covered by said sludge. An efficient spreading out of a said sludge over the filter surface may be obtained by this design of said spraying means.

According to another embodiment of the invention said at least one filter surface has a two dimensional extension. Such an extension of said filter surface, i.e. a substantially flat filter surface, facilitates efficient spreading out of the sludge uniformly over the filter surface.

According to another embodiment of the invention the arrangement comprises means configured to remove said dry substance retained on said at least one filter surface from said filter surface.

According to a further embodiment of the invention the arrangement further comprises at least one set of at least two rollers bearing against each other and means configured to drive said rollers to rotate in opposite directions so as to move in the same direction in the region of mutual contact, and said removing means is configured to conduct said dry substance into said region for being drawn into the nip between said rollers for pressing liquid substance still present in said dry substance out thereof while moving said dry substance through said nip by rotation of the rollers. By such rolling of the dry substance having previously been retained on the filter surface the dry substance content thereof may be increased to such a level that even in the case of comparatively high demands on a final product a further drying step, such as in a vacuum drier consuming a lot of energy, may be omitted.

According to another embodiment of the invention the arrangement comprises a second set of at least two said rollers connected to said first set by a dry substance feeding means and configured to carry out a further pressing of liquid substance out of said dry substance having passed said first set of rollers. An arrangement of such a second set of rollers makes it possible to increase the dry substance content of said dry substance further.

According to another embodiment of the invention the arrangement further comprises a holder holding said filter with said at least one filter surface, a stationary frame to which said holder is rotatably connected about a substantially horizontal axis, and means configured to rotate said holder about said axis, and dry substance collecting means is arranged on said holder in connection with said at least one filter surface so as to by means of gravitation receive and collect dry substance retained on said filter surface upon rotation of said holder from the position occupied during said spraying. A combination of such a rotation of the holder and an arrangement of said collecting means constitutes a simple and efficient way of removing said dry substance from the filter surface.

According to another embodiment of the invention the arrangement further comprises a collecting vessel for said dry substance retained, and said rotating means is configured to rotate said holder to reach a position in which said dry substance present in said collecting means will be influenced by the gravitation to fall down into said collecting vessel.

According to another embodiment of the invention the arrangement comprises means configured to spray a fluid onto said at least one filter surface for cleaning said filter surface after said dry substance has fallen down into said collecting means and before said at least one filter surface during said rotation has reached a position ready for receiving sludge thereonto again. The arrangement of such cleaning means makes the filter surface ready to receive sludge thereonto again and contributes to an efficient removal of liquid therefrom.

According to another embodiment of the invention said filter comprises a plurality of said filter surfaces arranged on said holder so as to each form one side of a polygon as seen in the direction of said axis, and a separate collecting means is arranged in connection with each said filter surface. This means a possibility to obtain a high capacity of said arrangement.

According to another embodiment of the invention the filter has four said filter surfaces together defining a rectangle, in which said rectangle preferably is a square.

According to another embodiment of the invention said cleaning means is configured to clean each said filter surface after the holder has been rotated by substantially 90° around said axis from the horizontal position during spraying to a substantially vertical position for the filter surface.

According to another embodiment of the invention said collecting vessel is arranged above said first set of rollers and has means for conducting said dry substance collected in said region between said at least two rollers. Thus, the gravitation may be used for conducting said dry substance falling down into the collecting vessel into said region for being rolled.

According to another embodiment of the invention the arrangement comprises means configured to conduct liquid substance removed from said dry substance of the sludge back to be added to sludge from which liquid has not been removed in said arrangement yet. This means that some dry substance still present in said liquid substance may still be utilized for obtaining a dry substance product.

The invention also relates to a method for removing liquid from a sludge according to the appended independent method claim. The advantageous features and advantages of such a method and of the methods according to the appended dependent method claims appear clearly from the above discussion of the arrangement according to the present invention.

Furthermore, the invention also relates to a use of an arrangement according to the invention for removing liquid from a sludge having a dry substance content of 1-15 weight-%, advantageously 2-10 weight-% and preferably 4-8 weight-%, when fed onto said at least one filter surface, in which it may be a question of dewatering of cattle droppings, especially emanating from cows, or of sewage sludge.

Further advantages as well as advantageous features of the invention will appear from the following description of embodiments of the invention.

### BRIEF DESCRIPTION OF THE DRAWINGS

With reference to the appended drawings, below follows a specific description of embodiments of the invention cited as examples.

In the drawings:
- Fig 1: is a perspective view of an arrangement according to a first embodiment of the invention, in which parts of a casing are broken away for the sake of illustrativeness,
- Fig 2: is a simplified view of the arrangement shown in Fig 1 from one end thereof,
- Fig 3: is an enlarged view of the arrangement shown in Fig 2 from the opposite end,
- Fig 4: is a view corresponding to the view of Fig 2 from said opposite end,
- Figs 5-7: are simplified views used to illustrate the filtering process of the arrangement shown in Figs 1-4, and
- Fig 8: is a view corresponding to Fig 5 of an alternative design of the filter in an arrangement according to a second embodiment of the invention.

### DETAILED DESCRIPTION OF EMBODIMENTS OF THE INVENTION

Explained herein are embodiments of the invention, describing the arrangement and method of the invention. The invention may, however, be embodied in many different forms and should not be construed as being limited to the exemplary embodiments set forth herein; rather, these embodiments are provided so that this disclosure will be thorough and complete, and will fully convey the concept of the invention to those skilled in the art.

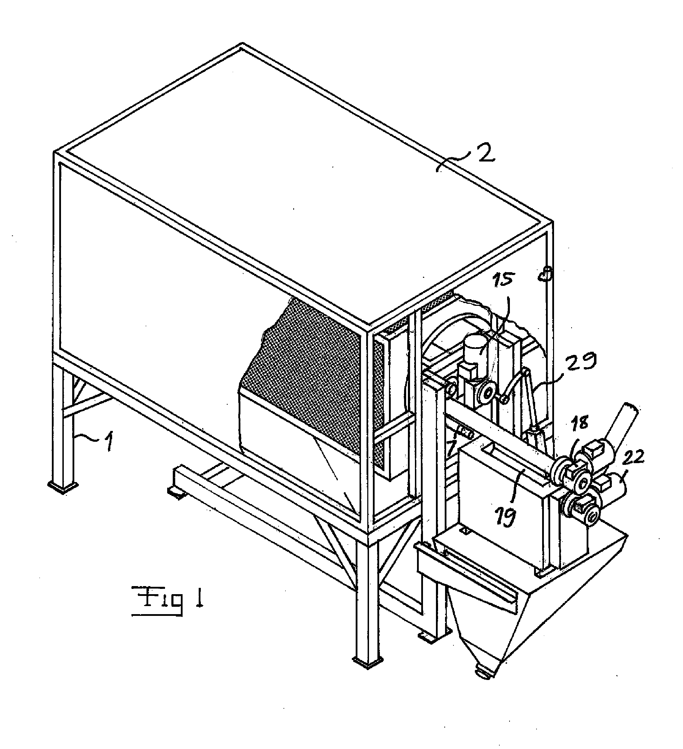

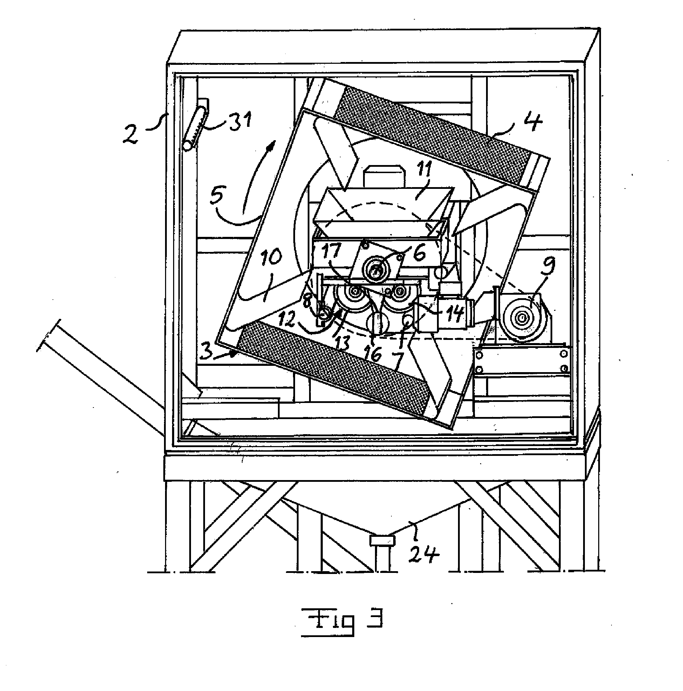

An arrangement for removing liquid from a sludge according to a first embodiment of the invention will now be explained while simultaneously making reference to Figs 1-4. This arrangement is particularly, but not exclusively, suited for handling liquid cattle droppings, such as cow droppings, root residues from biogas plants and sewage plants. The dry substance content of such sludge is normally 2-10 weight-%.

The arrangement comprises a stationary frame 1 resting on the ground and including a casing 2, in which a filter 3 is enclosed. The filter has four filter surfaces 4 with a mesh size of 20-300 µm, preferably 50-100 µm. Each filter surface has a two dimensional extension and forms one side of a longitudinal box having a square cross section. The rectangular filter surfaces 4 are held together and in place by a holder 5, which in its turn is rotatably connected to the frame 1 about a substantially horizontal axis 6.

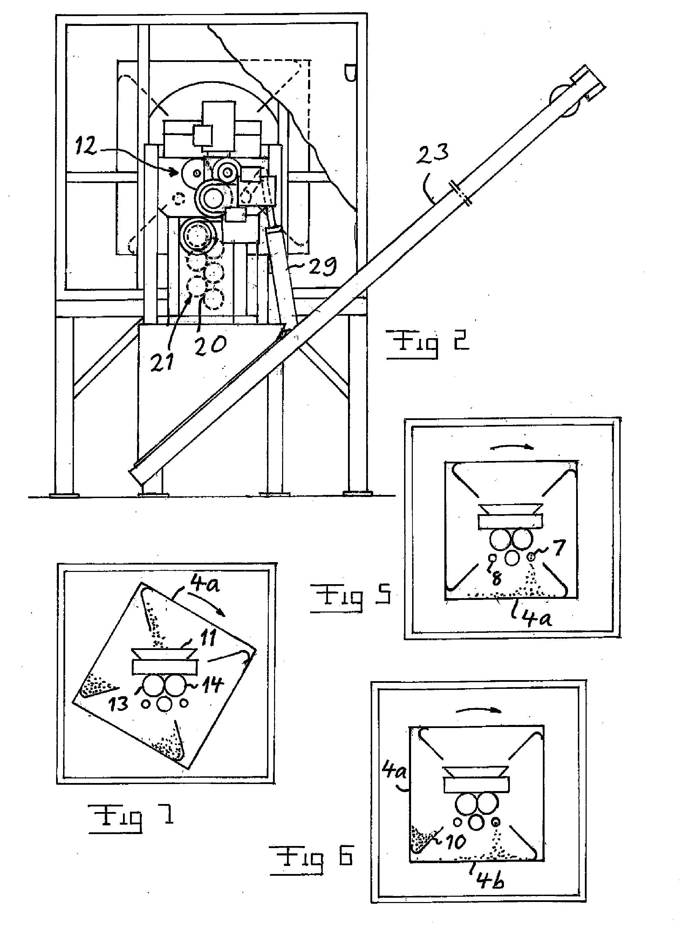

Means configured to feed a sludge, from which liquid is to be removed, to the filter is arranged in the form of a stationary tube 7 extending through the filter substantially in parallel with said axis 6, having a length substantially corresponding to the longitudinal extension of a said filter surface 4 and having openings for supplying a said sludge onto a filter surface kept substantially horizontally, as schematically illustrated in Fig 5.

The arrangement also comprises means 8 configured to spray liquid onto a said sludge fed to and present on a filter surface kept substantially horizontally as seen in Fig 5 so as to spread out said sludge over that filter surface. This spraying means 8 comprises a plurality of nozzles arranged along a tube extending substantially in parallel with said axis 6 over substantially the entire longitudinal extension of the filter 3. A member 29 is arranged to make said nozzles to carry out an oscillating movement for moving liquid jets emerging therefrom to and fro over said filter surface covered by the sludge resulting in a liquid (preferably water) curtain oscillating so that the sludge is efficiently spread out over the filter surface. By the fact that the filter surface in question is simultaneously held substantially horizontally solid particles are screened without being pressed through the meshes of the filter surface, through which liquid substance is efficiently flowing. Thus, liquid substance is removed from said sludge solely by means of gravitation forces acting thereupon.

The arrangement also comprises means 9, such as a suitable motor, configured to rotate the filter holder 5 about said axis 6. More exactly, said means 9 is configured to rotate the filter holder 5 by approximately 90° around the axis 6 once a batch of sludge has been spread out and filtered in the way just described, so that the filter surface 4a will be substantially vertically directed as shown in Fig 6. Dry substance collecting means in the form of longitudinal blades are arranged on the filter holder 3 in connection with each filter surface, and these will by means of gravitation receive and collect dry substance retained on a said filter surface upon rotation of the holder from the position occupied during the spraying.

The arrangement also comprises means 31 arranged in the casing 2 outside the filter 3 and configured to spray a fluid, preferably liquid obtained by removal from the sludge treated and recirculated, onto the filter surface 4a when in the position according to Fig 6, i.e. in the first vertical position assumed after having received sludge, for cleaning the filter surface after the dry substance has fallen down into the collecting means 10. In the position shown in Fig 6 a new batch of sludge will be fed onto the next filter surface 4b for removing liquid therefrom.

The rotating means 9 will rotate the filter in increments of 90° and already after the second such rotation increment the dry substance present in the collecting means 10 belonging to the filter surface 4a will by influence of the gravitation start to fall down into a longitudinal collecting vessel 11 arranged inside the filter 3. The collecting vessel 11 is arranged above a first set 12 of two rollers 13, 14 bearing against each other, and the vessel has means for conducting said dry substance collected down into a region between the two rollers 13, 14. The arrangement has means 15 configured to drive the two rollers 13, 14 to rotate in opposite directions so as to move in the same direction in said region of mutual contact for drawing dry substance entering this region into the nip between the rollers for pressing liquid substance still present in the dry substance out thereof while moving said dry substance through the nip by rotation of the rollers. A tube 16 with an upper opening 17 will receive the dry substance that has passed the rollers 13, 14 and a drive means 18 is configured to rotate a screw present in the tube 16 for feeding said dry substance out of the casing 2 for falling down into a further dry substance collecting vessel 19 and into a region between rollers 20 of a second set 21 configured to carry out a further pressing of liquid substance out of said dry substance having passed said first set of rollers. Means 22 configured to drive the rollers 20 to rotate for obtaining this is indicated in Fig 1. The arrangement also comprises means 23 for feeding the dry substance that has passed the second set of rollers and constituting a final product further for later suitable use, such as biomass for combustion or gasification or as a substrate in biogas production.

Liquid substance emanating from the sludge, the oscillating nozzles 8 and the cleaning means 31 will be collected in a vessel 24 arranged under the casing 2 for being through a pump 25 pumped away for preferably at least partially be returned for use when removing liquid from further batches of sludge.

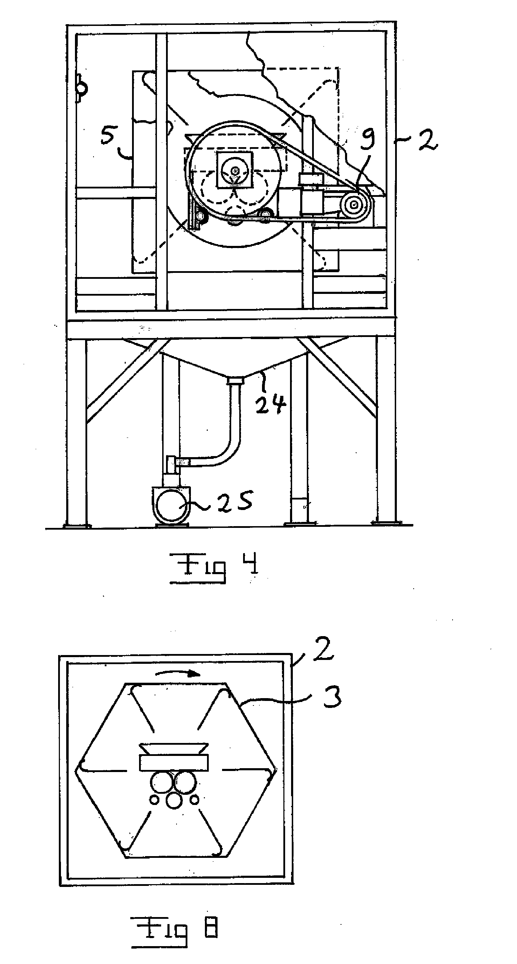

A part of an arrangement according to a second embodiment of the invention, namely the filter holder, is schematically illustrated in Fig 8. The filter holder according to this embodiment differs from the one according to the first embodiment by being a longitudinal box with a hexagonal cross-section, which also means that the holder rotating means will be configured to rotate the filter holder in increments of 60°.

The invention is of course not in any way restricted to the embodiments described above, but many possibilities to modifications thereof will be apparent to a person with ordinary skill in the art without departing from the scope of the invention as defined in the appended claims.

Thus, the arrangement may have only one set of rollers or no such sets, although the arrangement of the rollers does in many cases increase the dry substance content of the dry substance passing therethrough to a level making further drying measures superfluous or just resulting in a better final product. The arrangement may for instance have only one first set of rollers and these may then be arranged as shown in the figures inside the filter or outside the filter as the second set of rollers in the figures.

## Claims

1. An arrangement for removing liquid from a sludge comprising
• a filter (3) having at least one filter surface (4) configured to filter a said sludge by retaining dry substance of the sludge thereonto and letting liquid substance of the sludge pass through, and
• means (7) configured to feed a said sludge, from which liquid is to be removed, onto said at least one filter surface, **characterized in that** the arrangement further comprises
• means (8) configured to spray a liquid onto a said sludge fed to and present on said at least one filter surface (4) so as to spread out said sludge over said filter surface, and
• means (5, 9) configured to keep said at least one filter surface (4) substantially horizontally during said spraying so as to utilize the gravitation for obtaining passing of said liquid substance through said filter surface and by that for said removal of liquid from said sludge.

2. An arrangement according to claim 1, **characterized in that** said spraying means comprises a plurality of nozzles (8) configured to carry out an oscillating movement for moving liquid jets emerging therefrom to and fro over said filter surface (4) covered by said sludge.

3. An arrangement according to claim 1 or 2, **characterized in that** said at least one filter surface (4) has a two dimensional extension.

4. An arrangement according to any of the preceding claims, **characterized in that** it comprises means (9, 10) configured to remove said dry substance retained on said at least one filter surface from said filter surface (4).

5. An arrangement according to claim 4, **characterized in that** it further comprises at least one first set (12) of at least two rollers (13, 14) bearing against each other and means (15) configured to drive said rollers to rotate in opposite directions so as to move in the same direction in the region of mutual contact, and that said removing means is configured to conduct said dry substance into said region for being drawn into the nip between said rollers (13, 14) for pressing liquid substance still present in said dry substance out thereof while moving said dry substance through said nip by rotation of the rollers.

6. An arrangement according to claim 5, **characterized in that** it comprises a second set (21) of at least two said rollers (20) connected to said first set (12) by a dry substance feeding means (16) and configured to carry out a further pressing of liquid substance out of said dry substance having passed said first set of rollers.

7. An arrangement according to any of the preceding claims, **characterized in that** it further comprises a holder (5) holding said filter (3) with said at least one filter surface, a stationary frame (1) to which said holder is rotatably connected about a substantially horizontal axis (6), and means (9) configured to rotate said holder about said axis, and that dry substance collecting means (10) is arranged on said holder in connection with said at least one filter surface (4) so as to by means of gravitation receive and collect dry substance retained on said filter surface upon rotation of said holder from the position occupied during said spraying.

8. An arrangement according to claim 7, **characterized in that** it further comprises a collecting vessel (11) for said dry substance retained, and that said rotating means (9) is configured to rotate said holder to reach a position in which said dry substance present in said collecting means (10) will be influenced by the gravitation to fall down into said collecting vessel.

9. An arrangement according to claim 7, **characterized in that** it comprises means (31) configured to spray a fluid onto said at least one filter surface (4) for cleaning said filter surface after said dry substance has fallen down into said collecting means (10) and before said at least one filter surface during said rotation has reached a position ready for receiving sludge thereonto again.

10. An arrangement according to claim 7, **characterized in that** said filter (3) comprises a plurality of said filter surfaces (4) arranged on said holder (5) so as to each form one side of a polygon as seen in the direction of said axis (6), and that a separate collecting means (10) is arranged in connection with each said filter surface.

11. An arrangement according to claim 10, **characterized in that** the filter (3) has four said filter surfaces (4) together defining a rectangle as seen in said direction.

12. An arrangement according to claims 9 and 11, **characterized in that** said cleaning means (31) is configured to clean each said filter surface (4) after the holder has been rotated by substantially 90° around said axis (6) from the horizontal position during spraying to a substantially vertical position for the filter surface.

13. An arrangement according to claims 5 and 8, **characterized in that** said collecting vessel (11) is arranged above said first set (12) of rollers (13, 14) and has means for conducting said dry substance collected into said region between said at least two rollers.

14. A method for removing liquid from a sludge comprising the steps of feeding a sludge, from which liquid is to be removed, onto at least one filter surface (4) of a filter (3) and making liquid substance of the sludge to pass through the filter surface while retaining dry substance of the sludge thereonto, **characterized in that** a liquid is sprayed onto a said sludge fed to and present on said at least one filter surface so as to spread out said sludge over the filter surface while keeping said filter surface substantially horizontally so as to utilize the gravitation for obtaining passing of said liquid substance through said filter surface and by that for said removal of liquid from said sludge.

15. A method according to claim 14, **characterized in that** spraying of liquid is carried out by making a plurality of nozzles (8) to carry out an oscillating movement for moving liquid jets emerging therefrom to and fro over said filter surface covered by said sludge.

16. A method according to claim 14 or 15, **characterized in that** said dry substance retained onto said filter surface (4) is conducted into a region of mutual contact of two rollers (13, 14) bearing against each other while rotating said rollers in opposite directions so that said dry substance is drawn into the nip between said rollers for pressing liquid substance still present in said dry substance out thereof while moving said dry substance through said nip by rotation of the rollers.

17. Use of an arrangement according to any of claims 1-13 for removing liquid from a sludge having a dry substance content of 1-15 weight-%, advantageously 2-10 weight-% and preferably 4-8 weight-%, when fed onto said at least one filter surface.

18. Use according to claim 17 for dewatering cattle droppings, especially emanating from cows, or sewage sludge.

19. A method according to any of claims 14-16, **characterized in that** said at least one filter surface (4) is after passing of said liquid substance therethrough with dry substance retained thereon rotated about a substantially horizontal axis (6) so as to by means of gravitation bring said dry substance to fall down and be collected by collecting means (10) connected to a said filter surface so as to rotate therewith.

20. An arrangement according to any of claims 1-13, **characterized in that** it comprises means (25) configured to conduct liquid substance removed from said dry substance of the sludge back to be added to sludge from which liquid has not been removed in said arrangement yet.
